# EUROPÄISCHE PATENTSCHRIFT

(11) **EP 3 314 158 B1**
(45) Veröffentlichungstag und Bekanntmachung des Hinweises auf die Patenterteilung: **19.06.2019**
(21) Anmeldenummer: 16733944.9
(22) Anmeldetag: 29.06.2016
(51) Int. Cl.: B32B 1/00, B32B 27/08, B32B 27/12, B32B 27/34, B32B 1/08, B32B 27/40, B32B 5/02, B32B 5/04, B32B 5/26, B32B 27/32, B32B 27/36, B32B 7/04, B32B 7/12, F16L 55/165

(54) **ROHRAUSKLEIDUNGSMATERIAL ZUR VERWENDUNG FÜR MINDESTENS ZWEI VORDEFINIERTE ROHRLEITUNGSNENNWEITEN**
PIPE LINING MATERIAL FOR USE FOR AT LEAST TWO PREDEFINED PIPELINE NOMINAL WIDTHS
MATÉRIAU D'HABILLAGE DE TUYAU À UTILISER POUR AU MOINS DEUX DIAMÈTRES NOMINAUX DE CONDUITE PRÉDÉFINIS

(30) Priorität: 29.06.2015 DE 102015212025
(43) Veröffentlichungstag der Anmeldung: 02.05.2018
(73) Patentinhaber: Karl Otto Braun GmbH & Co. KG, 67752 Wolfstein (DE)
(72) Erfinder: LILL, Michael, 67659 Kaiserslautern (DE)
(74) Vertreter: DREISS Patentanwälte PartG mbB
(86) Internationale Anmeldenummer: PCT/EP2016/065140
(87) Internationale Veröffentlichungsnummer: WO 2017/001475

(56) Entgegenhaltungen:
- EP-A2- 0 875 713
- US-A- 4 576 205
- US-A- 5 501 248

## Beschreibung

Die Erfindung betrifft ein Rohrauskleidungsmaterial zur Verwendung für mindestens zwei, vorzugsweise drei vordefinierte Rohrleitungsnennweiten umfassend ein elastisches Rundstrickmaterial, welches unter Vorspannung so gestrickt ist, dass es sich nach dem Stricken auf einen entspannten Durchmesser von ± 10% der kleinsten vordefinierten Rohrleitungsnennweite zusammenzieht, sowie einen um das Rundstrickmaterial angeordneten elastischen Folienschlauch, wobei das Rohrauskleidungsmaterial um mindestens 50% in Querrichtung aufweitbar ist bei einem Druck von maximal 0,7 bar. Dabei handelt es sich um das fertige Rohrauskleidungsmaterial bestehend aus Rundstrickmaterial und Folie in einem entspannten Zustand, wie er vor dem Einbau vorliegt.

Ein derartiges Rohrleitungsauskleidungsmaterial dient insbesondere zur Auskleidung von sanierungsbedürftigen Kanal- und/oder Rohrleitungen, die nachfolgend als Rohrleitungen bezeichnet sind.

Darüber hinaus betrifft die Erfindung die Verwendung eines derartigen Rohrleitungsauskleidungsmaterials sowie ein Verfahren zu dessen Herstellung.

Bei der Sanierung von verdeckt verlegten Kanälen und Rohrleitungen, insbesondere Hauskanälen, mit geringem Rohrdurchmesser, wie beispielsweise im Mauerwerk oder unter der Erde, ist die Sanierung durch Entfernen und Austausch der defekten Teilbereiche eine aufwendige und kostenintensive Maßnahme. Die dabei notwendigen Erd- und/oder Aufstemmarbeiten sind zeit- und kostenaufwendig, häufig schwierig durchzuführen und erfordern besondere Maßnahmen zum Schutz vor Verschmutzung, insbesondere bei Arbeiten, die im Gebäude durchgeführt werden. Ferner stellen die dadurch entstehenden Baustellen eine potentielle Gefahrenquelle und eine Belästigung der Umgebung dar. Es besteht daher ein großer Bedarf nach alternativen baulichen Vorgehensweisen, die eine Auskleidung von Rohrleitungen erlauben, ohne dass dabei die Leitung freigelegt und eventuell Leitungsteile entfernt und ausgetauscht werden müssen.

Es sind bislang verschiedene Verfahren zur Rohrauskleidung bekannt sowie verschiedene Materialien, die zu diesem Zweck verwendet werden.

So ist beispielsweise aus der EP 0 875 713 B1 ein Material bekannt, das aus einem schlauchförmigen Plüschtextilmaterial besteht sowie einen koaxial und frei beweglich angeordneten Folienschlauch umfasst und das Plüschtextilmaterial eine Dehnbarkeit in Längsrichtung von 10 bis 70% und in Querrichtung von 50 bis 200% besitzt, wobei die Kraft zur Dehnung des Folienschlauchs in Längs- wie in Querrichtung um 40% einen Betrag von 10 N/cm nicht übersteigt.

Ein solches Material wird im Rundstrickverfahren nahtlos hergestellt und besteht aus einem Warengrund und ein- oder beidseitigen Fadenstreifen (Henkeln), die aus dem Warengrund vorstehen und einer darum angeordneten, vorzugsweise festverbundenen nahtfreien Folie. Besonders ist es mit einem solchen Material auch möglich, Auskleidungen in Rohrleitungen vorzusehen, die stark gewinkelte Bögen von beispielsweise 90° aufweisen.

Dabei war es bereits im Stand der Technik bekannt, Rohrleitungsauskleidungsmaterialien herzustellen, die zur Verwendung von mindestens zwei vordefinierten Rohrleitungsnennweiten geeignet sind, wobei die Materialien unter Vorspannung nahtlos als Rundmaterial gestrickt werden, wobei die Rundmaterialien dabei so gestrickt sind, dass der Strickkopf im Wesentlichen der größten der angestrebten Rohrleitungsnennweiten (Rohrinnendurchmesser) entspricht und insbesondere ca. 1/3 größer als die größte Nennweite gewählt wird.

### Grundsätzlich bieten derartige

Rohrleitungsauskleidungsmaterialien den Vorteil, dass nicht für jede Rohrleitungsnennweite ein separates Auskleidungsmaterial bereitgestellt und bevorratet werden muss, sondern durch Verwendung eines Materials für zwei bis drei Rohrleitungsnennweiten die Lagerhaltung optimiert werden kann.

### Nachteilig bei den bisherigen

Rohrleitungsauskleidungsmaterialien, die zur Verwendung für mindestens zwei vordefinierte Rohrleitungsnennweiten geeignet sind, ist die erhebliche Elastizität des Materials, das sich vom Strickdurchmesser des Rundstrickmaterials, der größer als die größte vorgegebene Nennweite ist, auf den kleinsten gewünschten Rohrleitungsinnendurchmesser (Rohrleitungsnennweite), der vordefiniert ist, zusammenziehen können muss. Durch die hohe Elastizität des Rohrleitungsauskleidungsmaterials ist zwar die Bogengängigkeit des fertigen Rohrleitungsauskleidungsmaterials während des Einbringprozesses vorteilhaft, diese birgt aber auf der anderen Seite das Risiko des Berstens, da sich das Material extrem aufdehnen kann. Darüber hinaus ist das Material schwierig in der Länge zu beherrschen, so dass es dazu kommen kann, dass das Material sich in Abzweigungen der Rohrleitungen zu weit hinein erstreckt, wenn sich das Material während des Einbaus zu stark längt und in diese Abzweigungen eintritt, was dann wiederum aufwendige Ausfräsarbeiten nach sich zieht.

Weitere Verfahren zur Herstellung von Rundstrickmaterialien zur Verwendung mit Rohrleitungen sind aus der US 4,576,205 A sowie der US 5,501,248 A vorbekannt.

Es ist daher Aufgabe der Erfindung, ausgehend von diesem bekannten Material zur Verwendung für mindestens zwei vordefinierte Rohrleitungsnennweiten ein Material bereitzustellen, das hinsichtlich des Risikos des Berstens sowie des Längenverhaltens besser beherrschbar ist.

Die Erfindung löst diese Aufgabe durch Bereitstellung eines elastischen Rohrauskleidungsmaterials, wobei das Rohrauskleidungsmaterial um mindestens 50% in Querrichtung aufweitbar ist bei einem Druck von maximal 0,7 bar, vorzugsweise bei einem Druck von 0,6 bar und weiter vorzugsweise bei einem Druck von 0,5 bar, so dass mindestens zwei vordefinierte Rohrleitungsnennweiten hierdurch abdeckbar sind, wobei das entspannte Rundstrickmaterial höchstens einen um 55%, insbesondere höchstens um 50%, insbesondere höchstens um 45%, insbesondere um 45%-50%, insbesondere höchstens um 35% geringeren Durchmesser aufweist als das unter Vorspannung stehende Rundstrickmaterial und eine Querdehnbarkeit von 100% ± 20%, insbesondere 100% ± 10% aufweist. Vorzugsweise weist das entspannte Rundstrickmaterial einen um wenigstens 5 %, insbesondere um wenigstens 10 %, insbesondere um wenigstens 15 %, insbesondere um wenigstens 20 %, insbesondere um wenigstens 25 % und weiter insbesondere um wenigstens 30 % geringeren Durchmesser als das unter Vorspannung stehende Rundstrickmaterial auf. Die Dehnbarkeit des Auskleidungsmaterials wird mittels der nachfolgend beschriebenen Dehnungstestmethode ermittelt. Die Querdehnbarkeit der Rundstrickware wird mittels des beschriebenen Querdehnungstests bestimmt.

Ein derartiges Rundstrickmaterial ist so ausgebildet, dass es sich ausgehend vom vorgespannten Zustand in der Herstellung geringfügiger zusammenzieht als bisher bekannte Rundstrickmaterialien, wobei das Rundstrickmaterial insbesondere so hergestellt ist, dass es auf einem Strickkopf mit einem Durchmesser, der ± 10% des mittigen Durchmessers zwischen dem größten und dem kleinsten vorgegebenen Rohrleitungsinnendurchmesser (Rohrleitungsnennweite) entspricht, gestrickt wird, so dass ausgehend hiervon ein Zusammenziehen nur um lediglich die Hälfte des gesamten Spektrums der abzudeckenden Rohrleitungsnennweiten notwendig ist. Die Aufdehnung auf die größtmögliche Rohrleitungsnennweite, die vordefiniert ist, erfolgt dann unter Ausnutzung der Elastizität des Materials. Dabei wird die Dehnbarkeit des Rohrauskleidungsmaterials in Längs- als auch in Querrichtung im Wesentlichen durch das Rundstrickmaterial bestimmt.

Auf diese Weise hat die elastische Garnkomponente eine geringere Vorspannung beim Stricken und das Gesamtmaterial muss sich insbesondere weniger zusammenziehen, als das bisher bekannte Material.

Diese Verringerung der Elastizität des Materials führt dazu, dass die Dehnbarkeit in Längsrichtung besser beherrschbar ist, ebenso wie die Dehnbarkeit in Querrichtung. Darüber hinaus können aufgrund des geringeren notwendigen Zusammenziehens Garne mit einer höheren Dicke und daraus resultierend höherer Reißfestigkeit verwendet werden, so dass die Berstsicherheit des gesamten Rohrleitungsauskleidungsmaterials erhöht werden kann.

Die Prüfung (Querdehnungstest) der Querdehnbarkeit der Rundstrickware wird mittels eines Hausverfahrens bei folgenden Bedingungen durchgeführt: Temperatur 20°C +/- 2°C und relative Luftfeuchtigkeit(RF) 55% +/- 5%). Für diese Prüfung wird eine horizontale Kraft-Dehnungs-Anlage verwendet. Diese besteht im Wesentlichen aus einem Prüftisch mit fest angebrachtem Maßband, einer festen und einer auf Rollen gelagerten Aufnahme mit einem Halter für den Prüfling und einem Gewicht von 20 kg (entsprechend 10N/cm) am Ende des Prüftisches, welches mit der beweglichen Aufnahme verbunden ist.

Ein Strickschlauchabschnitt von 20 cm Länge wird quer in die zwei Halter für den Prüfling eingehängt. Dann wird das Gewicht betätigt, so dass sich die gelagerte Aufnahme bis zur maximal möglichen Dehnung des Schlauchs bewegt. Die gedehnte Länge kann so direkt abgelesen werden. Die Querdehnbarkeit ergibt sich aus dem Verhältnis aus gedehntem zu ungedehntem Zustand (SOLL-Breite). Dabei wird die Soll-Breite unabhängig von der tatsächlichen Breite, die Abweichungen von der Soll-Breite aufweisen kann, zugrunde gelegt.

Dabei kann vorgesehen sein, dass das bei der Herstellung vorgespannte Rundstrickmaterial auf einen Durchmesser von ±10%, vorzugsweise ± 5% der kleinsten vordefinierten Rohrleitungsnennweite entspannbar ist und sich nach der Herstellung auf diese Größe zusammenzieht. Das entspannte Rundstrickmaterial kann dabei insbesondere einen um maximal 55% geringeren Durchmesser aufweisen als das unter Vorspannung stehende Rundstrickmaterial im Herstellungsverfahren, weiter bevorzugt einen um 50% geringeren Durchmesser und insbesondere einen um 45 bis 50% und insbesondere einen maximal 45%, insbesondere einen maximal 35% geringeren Durchmesser als das unter Vorspannung stehende Rundstrickmaterial in der Herstellung. Vorzugsweise weist das entspannte Rundstrickmaterial einen um wenigstens 5 %, insbesondere um wenigstens 10 %, insbesondere um wenigstens 15 %, insbesondere um wenigstens 20 %, insbesondere um wenigstens 25 % und weiter insbesondere um wenigstens 30 % geringeren Durchmesser als das in der Herstellung unter Vorspannung stehende Rundstrickmaterial auf.

Das Rundstrickmaterial kann dabei vorzugsweise ein Plüschtextilschlauch sein. Ein derartiger Textilschlauch wird in einem Rundstrickverfahren nahtlos hergestellt. Darunter versteht man eine rundgestrickte Maschenware, bei der aus dem Warengrund ein- oder beidseitig Fadenstreifen (Henkel) hervorstehen. Durch eine geeignete Auswahl der Verstrickungsparameter lassen sich für das jeweilig verwendete Faserausgangsmaterial die zur Erzielung der erfindungsgemäßen Wirkung erforderlichen mechanischen Eigenschaften des Textilschlauchs einstellen.

Als Fasermaterialien für den Textilschlauch können beliebige Kunstfasermaterialien verwendet werden, solange sie eine hinreichende Resistenz gegen das Umgebungsmedium der Vorrichtung des Auskleidungsmaterials aufweisen, zu deren Auskleidung das Auskleidungsmaterial verwendet werden soll.

Bevorzugte Fasermaterialien sind Elastan, Polyester, Polyester (hochfest), Aramid, Polyamid, Polyurethan, Glasfasern, Basalt, Kohlefasern sowie Metallgarne, -drähte. Insbesondere können im Grundgewebe verschiedene Materialien eingesetzt werden sowie weitere Materialien für die Henkel.

Bei der Herstellung einer Auskleidung aus dem erfindungsgemäßen Auskleidungsmaterial wird vorzugsweise ein Verfahren angewandt, bei dem das mit Harz, insbesondere Epoxidharz getränkte Auskleidungsmaterial unter Druckbeaufschlagung in einem Inversionsschlauch in das auszukleidende Volumen eingeführt wird, wobei das Auskleidungsmaterial von innen nach außen umgestülpt und an die Wandung des auszukleidenden Volumens gedrückt wird.

Die Dehnbarkeit des Rohrauskleidungsmaterials ist dabei so eingestellt, dass einerseits gewährleistet ist, dass auch Bögen von 90° mit dem erfindungsgemäßen Auskleidungsmaterial so ausgekleidet werden können, dass das Rohrauskleidungsmaterial stets eng an der Wandung anliegt. Auf der anderen Seite ist eine übermäßige Dehnung unerwünscht. Die Werte für die Dehnbarkeit in Längsrichtung bei 0,6 bar liegen vorzugsweise bei maximal 15%, insbesondere bei maximal 10%. Als Meßmethode dient ebenfalls die unter Dehnungstestmethoden beschriebene Methode.

Durch die vorzugsweise maximale Einstellbarkeit der Dehnung in Querrichtung auf maximal 80% des Durchmessers des entspannten Rohrauskleidungsmaterials bei einem Druck von 0,9 bar, vorzugsweise auf 65% bis 80% bei 0,9 bar bzw. auf maximal 65% bei 0,5 bar, vorzugsweise 40% bis 60 % bei 0,5 bar, bezogen auf die kleinste Nennweite der vorgegebenen Rohrleitungsnennweiten kann erreicht werden, dass das Rohrleitungsauskleidungsmaterial bei der Herstellung von Rohrleitungsauskleidungen im Bereich von seitlichen Verzweigungen in diese in einem gewünschten definierten Maß hineingedrückt wird, wodurch in dem direkten Übergang der auszukleidenden Rohrleitungen zu den Abzweigungen der Materialauftrag dünner ist als im restlichen auszukleidenden Volumen, wodurch sich in nachfolgenden Schritten leichter quasi nahtlose Übergänge von einer Leitung in die andere erzeugen lassen. Die Bestimmung der Dehnung erfolgt nach der beschriebenen Dehnungstestmethode.

Dabei ist vorgesehen, dass um das Rundstrickmaterial herum ein elastisch dehnbarer Folienschlauch angeordnet ist. Der Folienschlauch sollte genauso wie der Textilschlauch des erfindungsgemäßen Auskleidungsmaterials eine Temperaturbeständigkeit aufweisen. Je nach Aushärtetemperatur der Harzkomposition können verschiedene Temperaturbeständigkeiten erforderlich sein.

Dabei wird der Folienschlauch zusammen mit dem Textilschlauch eingesetzt und es kann nach einer bevorzugten Ausführungsform vorgesehen sein, den Textilschlauch mit dem Folienschlauch zu kaschieren, worunter eine partielle oder vollflächige Verklebung zweier Flächen verstanden ist.

Dabei soll das Folienmaterial insbesondere während des Einbaus eine Abdichtungsfunktion besitzen. Es ist daher bevorzugt, dass der Folienschlauch je nach Verwendungszweck eine möglichst geringe Gas- oder Flüssigkeitsdurchlässigkeit, insbesondere Wasserdurchlässigkeit, aufweist. Nach erfolgtem Einbau wird die Dichtigkeit insbesondere durch das auf das Textilmaterial aufgebrachte Harz bestimmt.

Innerhalb dieses Rahmens ist das Material, aus dem der Folienschlauch besteht, weitgehend variabel, wobei zusätzlich noch ökologische Gesichtspunkte eine Rolle spielen können. Der Folienschlauch sollte jedoch mit der härtbaren Harzzusammensetzung, mit welcher das Textilmaterial getränkt wird, kompatibel sein, insbesondere muss er zuverlässig mit dem Harz verklebbar sein, so dass er sich später nicht von dem Textilmaterial ablöst.

Im Hinblick auf die üblicherweise als Harzzusammensetzungen verwendeten Materialien sind für den Folienschlauch Polyester, Polyurethan, Polyesterurethan, Polyamid, Polyethylen, Polypropylen bevorzugt. Weiterhin können auch Multilagenfolien aus diesen Materialien eingesetzt werden, wobei auch Lagen verschiedener Materialien kombiniert werden können. Für besondere Anwendungszwecke können auch Folienschläuche aus Silikonharz verwendet werden.

Die Dicke des Folienschlauchs kann in Abhängigkeit von den gewünschten Dichteigenschaften und der Kompatibilität mit der zu verwendenden Harzzusammensetzung und der Dehnung des Folienschlauchs ausgewählt werden. Im Allgemeinen sind Folienschlauchstärken von 50 bis 250 µm bevorzugt, insbesondere von 80 bis 200 µm.

Dabei kann vorgesehen sein, dass die Dehnbarkeitswerte des Folienschlauchs sowohl in Längs- als auch in Querrichtung über denen des Textilmaterials liegen. Dabei weist das Folienmaterial vorzugsweise eine Spannung bei 50% Dehnung gemessen nach DIN EN ISO 527-3 von < 10 MPa, vorzugsweise < 7 MPa auf. Die Messung der Spannung erfolgt bei einer Raumtemperatur von 20°C +/- 2°C und einer relativen Luftfeuchte von 55% +/- 5% mit drei Probenkörpern rechteckiger Form mit einer Breite von 5 cm und einer Länge von 20 cm bei Schlauchdurchmessern größer als 80 mm und einer Länge von 10 cm bei Schlauchdurchmessern kleiner als 80 mm.

Ebenso wie beim Textilmaterial ist auch die Dehnung des gesamten Materials zur Rohrauskleidung einschließlich des Folienmaterials um mindestens 50% in Querrichtung bei einem Druck von maximal 0,7 bar, vorzugsweise 0,6 bar und weiter vorzugsweise maximal 0,5 bar realisierbar. Die Testmethode ist nachfolgend zum Ausführungsbeispiel (Dehnungstestmethode) beschrieben.

Dabei erfolgt die Herstellung einer Rohrauskleidung mit dem erfindungsgemäßen Auskleidungsmaterial wie folgt:
a) Imprägnieren eines Auskleidungsmaterials umfassend das Rundstrickmaterial und den Folienschlauch in einer geeigneten Längen- und Durchmesserdimensionierung für den vorgesehenen individuellen Einsatz mit einer härtbaren Harzzusammensetzung (Imprägnierstoff),
b) Einführen des imprägnierten Auskleidungsmaterials aus Schritt a) in einen Inversionsdruckschlauch,
c) Einpressen der Anordnung aus Schritt b) in den auszukleidenden Rohrabschnitt mittels eines druckbetriebenen Inversionsverfahrens und
d) Aushärten des Imprägnierstoffes unter Beibehaltung eines Drucks in dem Inversionsschlauch, der das Andrücken des imprägnierten Auskleidungsmaterials an die Wandung des Rohrabschnitts gewährleistet.

Die Herstellung des Verbundes von Strickmaterial und Folienschlauch erfolgt vorzugsweise mittels Kaschieren.

Nach diesem Verfahren lassen sich Auskleidungen herstellen, die an allen Bereichen eng und nahezu faltenfrei an der Wandung des ausgekleideten Hohlraums anliegen, auch bei kritischen Bereichen, wie in Bögen von bis zu 90°, in Bereichen, in welchen der Durchmesser des ausgekleideten Hohlraums eingeengt oder aufgeweitet wird sowie in Bereichen von Abzweigungen oder hinzutretenden Seitenleitungen. Das Verfahren ist besonders gut geeignet zur Auskleidung von Kanälen und Rohren mit einem Innendurchmesser von 25 bis 800 mm, insbesondere 50 bis 400 mm und insbesondere 70 bis 250 mm. Zur Erzielung besonders vorteilhafter Ergebnisse ist es bevorzugt, dass das in dem obigen Verfahren eingesetzte Auskleidungsmaterial so dimensioniert ist, dass der ungedehnte Textilschlauch und der ungedehnte Folienschlauch gemeinsam jeweils einen Durchmesser aufweisen, der insbesondere 10%, vorzugsweise 5% kleiner ist als der Innendurchmesser des auszukleidenden Rohres ist.

Darüber hinaus sind übliche Verfahrensschritte möglich, wie beispielsweise das Einbringen eines Preliners sowie die Vorbereitung der entsprechenden Rohrleitungen.

Als Harzzusammensetzung kommen handelsübliche Harzsysteme für den entsprechenden Einsatzzweck in Betracht. Erfindungsgemäß bevorzugte Harzsysteme sind kalthärtende Epoxidharze, kalthärtende ungesättigte Polyesterharze (UP-Harze), UVhärtende UP-Harze und PU-Harze.

Das erfindungsgemäße Auskleidungsmaterial ist vielseitig einsetzbar zur Herstellung von Auskleidungen, insbesondere von Kanal- und Rohrauskleidungen von öffentlichen oder privaten Abwassersystemen. Sie sind geeignet zur Reparatur und Sanierung maroder Leitungssysteme, wie beispielsweise Lüftungsrohre, Abwasserleitungen, Gasleitungen, Abgasleitungen und Flüssigkeitstransportleitungen und ermöglichen die Bereitstellung einer eng anliegenden und nahezu faltenfreien Auskleidung des jeweiligen Systems, selbst wenn dieses geometrisch schwierige Passagen, wie Verjüngungen oder Erweiterungen des Rohrdurchmessers, Bögen, etc. oder andere Unregelmäßigkeiten aufweist. Das Rohrauskleidungsmaterial ist aber auch vorteilhaft z. B. in Rohren zum Korrosionsschutz einzusetzen.

Besonders vorteilhaft ist es dabei bei der Erfindung, dass das Rohrleitungsauskleidungsmaterial so hergestellt wird, dass es zur Verwendung für mindestens zwei, vorzugsweise jedoch drei, vordefinierte Rohrleitungsnennweiten eingesetzt werden kann und somit pro zwei bzw. drei auskleidbaren Rohrleitungsnennweiten nur ein einziges Auskleidungsmaterial bevorratet werden muss.

Das Grundmaterial besteht dabei aus einem elastischen Fadenmaterial sowie einem unelastischen Sperrfaden (Dehnungsbegrenzungsfaden), der eine weitere Dehnung als die maximal vorgesehene Dehnung sowohl in Längs- als auch insbesondere in Querrichtung verhindert und als Dehnungsschwelle oder -grenze dient.

Neben der Verhinderung einer weitergehenden Dehnung und damit einer Sicherung gegen Bersten führt der Sperrfaden, aber auch der elastische Faden sowie die Henkel auch dazu, dass ein weiteres Zusammenziehen des Grundmaterials als vorstehend angegeben mechanisch blockiert ist.

Der Sperrfaden kann dabei eine andere, z. B. höhere Fadenfeinheit aufweisen als der übrige elastische Anteil des Grundstrickmaterials, der insbesondere als dehnbares Material ausgebildet sein kann.

In das Grundstrickmaterial sind zusätzlich noch Henkel eingebracht, die insbesondere unelastisch ausgebildet sind und über die die Aufnahmefähigkeit für das Harz erhöht wird.

Um ein Zusammenziehen des Gestricks unmittelbar nach Verlassen des Strickkopfes auf die geforderte Breite zu gewährleisten, wird das elastische, maschenbildende Element des Rundstrickmaterials mittels eines Fournisseurs (= elektronische Fadenzufuhr), mit einem integrierten Kontrollsystem der Firma BTSR®, Olgiate Olona, Italien Typ "ULTRAFEEDER", kontinuierlich mit definierter Fadenspannung zugeführt. Je nach Materialstärke und geforderter Endbreite des Strickschlauchs wird am Fournisseur ein Kraftäquivalent von 5 bis 24 g (entspricht ca. 50 bis 240 cN)eingestellt.

Des Weiteren kann vorgesehen sein, eine Verwendung eines Rohrleitungsauskleidungsmaterials für die Auskleidung von Rohrleitungen einzusetzen, wobei jeweils drei vordefinierte Rohrleitungsnennweiten durch ein Rundstrickmaterial abdeckbar sind. Dabei können z. B. die Nennweiten DN 70, DN 80 und DN 100 durch ein einzelnes Rohrleitungsauskleidungsmaterial abgedeckt werden. Die Nennweiten ergeben sich dabei aus folgender Norm DIN EN ISO 6708.

Insbesondere kannauch ein Verfahren zur Herstellung eines Rundstrickmaterials der vorstehend beschriebenen Art zur Verwendung mit Rohrleitungen mit mindestens zwei, vorzugsweise drei vordefinierten Rohrleitungsnennweiten für ein Rohrauskleidungsmaterial vorgesehen sein, insbesondere nach einem der vorhergehenden Ansprüche mit folgenden Schritten:
a) Stricken des Rundstrickmaterials aus einem Grundstrickmaterial und einem Henkelmaterial als Plüschtextilschlauch unter Vorspannung mit einem Durchmesser der im Wesentlichen mittig zwischen der größten und kleinsten vordefinierten Rohrleitungsnennweite liegt,
b) Zusammenziehenlassen des Rundstrickmaterials auf einen Durchmesser, der +/- 10 %, vorzugsweise +/- 5 % der kleinsten vordefinierten Rohrleitungsnennweite beträgt.
c) Kaschieren des Gesamtstrickschlauchs mit einem nahtlosen Folienschlauch, wobei dieser Prozess in mehreren Stufen oder in einem Arbeitsgang, mit partieller oder vollflächiger Verklebung der beiden Materialien erfolgt.

Unter "im Wesentlichen mittig" soll dabei auch verstanden werden, dass eine Abweichung von bis zu einem ½" (1.25 cm) maschinenbedingt vorzugsweise ¼" (0.635 cm) erfolgt. Aufgrund der zölligen Einteilung wird in der Regel die nächstliegende ¼" Größe gewählt.

Die Fadenspannung sowie die Materialauswahl für das Rundstrickmaterial können dabei wie vorstehend zum Rohrauskleidungsmaterial beschrieben erfolgen.

Dieser Prozess kann in mehreren Stufen oder in einem Arbeitsgang erfolgen. Der Strickschlauch wird mit der Folie nahtlos durch ein Klebemittel, vorzugsweise Klebefolie, insbesondere aus einem thermoplastischen Material, verbunden. Die Verklebung kann sowohl partiell, als auch durchgehend erfolgen.

Sofern die angestrebte Breite nicht durch das Strickverfahren alleine erreicht werden kann, gibt es zusätzlich die Möglichkeit einer thermischen Nachbehandlung. Diese dient dazu, die im Strickschlauch vorliegenden latenten Spannungen aufzulösen. Durch Erhitzen kann ein erhebliches Krumpfen erfolgen, deren Ausmaß von der Faserart, Fasertyp und der Warenkonstruktion abhängen kann.

Als Behandlungsschritt kann z. B. ein Tumbeln erfolgen. Dabei soll unter "Tumbeln" ein Trockenprozess verstanden werden, bei dem das Textilgut durch Einblasen von Heißluft getrocknet wird. Je nach eingesetztem Material empfehlen sich Temperaturen von 90-250°C, vorzugsweise 100-200°C, insbesondere 120-160°C.

Die Erfindung soll im Folgenden anhand eines Beispiels eines Rohrauskleidungsmaterials erläutert werden, dass die Rohrleitungsnennweiten DN70, DN80 und DN100 abdeckt:
Um ein Rohrauskleidungsmaterial mit einem Rundstrickmaterial herzustellen für eine Rohrleitung mit den Maßen DN70 beziehungsweise 2 ½" (6.35 mm) würde eine Strickmaschine mit einem Strickkopfdurchmesser von 3 ¾" (9.5 cm) und für die DN100 ein entsprechender Strickkopfdurchmesser von 5 ¼" (13.33 mm) benötigt werden.

Um nun ein Rohrauskleidungsmaterial mit einer Verwendbarkeit sowohl bei DN70 als auch bei DN100 zu realisieren, wird bei der zugrundeliegenden Erfindung ein Strickkopf gewählt, der zwischen den Maßen vorzugsweise im Wesentlichen mittig, wie vorstehend erläutert, liegt.

Idealerweise würde in diesem Fall also das Rundstrickmaterial in Form eines Plüschtextilschlauches auf einem Strickknopf mit einem Durchmesser von 4 ½" (11.43 mm) hergestellt werden.

Damit sich der Schlauch auf das Maß des DN70-Rohrs bei einer flachliegenden Breite des Strickschlauchs von ca. 90 mm zusammenzieht, wird ein elastischer Faden in das Grundmaterial (Grund) eingestrickt. Der Aufbau eines solchen Plüschtextilschlauchs kann dabei wie folgt sein:

### Beispiel:

Grundstrickmaterial: ca. 23 tex (gedehnt) umwundenes Elastan Ca. 55 tex PES hochfest (je ein Fd/System)
Henkel: ca. 30 tex PES hochfest (je ein Fd/System), ca. 55 tex PES hochfest (je 2 Fd/System)

Bindung: Rechts/Links
MR/10 cm 38 bis 46 (MR = Maschenreihen)
Querdehnung: (100 ± 20)%
Flächengewicht: 2400 bis 2900 g/m².

Je nach gewünschten Durchmessern kann eine Anpassung bei der Fadenauswahl, nämlich die Anzahl der Fäden pro System und gegebenenfalls der Fadenfeinheit getroffen werden.

Der Plüschschlauch wird dann in einem weiteren Prozessschritt mit einer nahtlosen Schlauchfolie kaschiert. Ein nahtlos extrudierter Folienschlauch aus thermoplastischem Polyurethan wird je nach Nennweite in der passenden Breite, hier mit einer flachliegenden Breite von 95 mm +/- 5mm und einer Dicke von ca. 100 +/- 5 □m ausgewählt. Verbunden werden Folienschlauch und Strickschlauch mit einem thermoplastischen Kleber.

### Dehnungstestmethode:

Der nachfolgend beschriebene Dehnungsversuch dient der internen Qualitätskontrolle des Rohrleitungsauskleidungsmaterials und wird bei einer Raumtemperatur von 20°C +/- 2°C und einer relativen Luftfeuchtigkeit von 55% +/- 5% durchgeführt. Er stellt auch das Verfahren zur Bestimmung der Aufdehnung (Aufweiten) um 50% bei einem definierten Druck dar wie es zur Charakterisierung des Rohrauskleidungsmaterials dient. Ebenfalls wird mit diesem Verfahren die Längendehnung gemäß der Erfindung bestimmt. Es spiegelt das Verhalten des Auskleidungsmaterials während des Einbaus wieder. Hierfür wird eine definierte Länge des bereits mit einem Folienschlauch kaschierten Auskleidungsmaterials, insbesondere 2,7 m abgemessen und gegebenenfalls mit Gleitmittel, zum Beispiel Silikonspray, versehen. Das definierte Stück wird dann in die Inversionstrommel gegeben und mit einem leichten Druck von 0,1 bar inversiert. Es wird dann eine Strecke von 1m mittig auf dem Auskleidungsmaterial markiert, welche zusammen mit dem Umfang während des Experiments immer wieder mit einem flexiblen Maßband gemessen wird.

Es erfolgt dann ein stufenweises Ansteigen des Drucks in 0,05 bar-Schritten bis der Maximaldruck von 0,9 bar erreicht ist. Eine Messung erfolgt dabei ab 0,2 bar. Ist der nächsthöhere Druck erreicht, zum Beispiel 0,2 bar, so wird zunächst 60 Sekunden auf dieser Stufe abgewartet, sodass sich das Auskleidungsmaterial an das neue Druckniveau anpassen kann, dann werden Länge und Umfang notiert und die nächsthöhere Druckstufe, zum Beispiel 0,25 bar angesteuert. Diese wird in der Regel jeweils nach ca. 60 Sekunden erreicht sein. Wichtig bei dieser Prüfung ist, dass zum einen das Auskleidungsmaterial auch nach 0,9 bar noch dicht ist, also keine Luft entweichen darf, zum anderen bei einem Druck von 0,4 bis 0,5 bar der mit diesem Auskleidungsmaterial größtmögliche Rohrdurchmesser erreicht wird, also eine Aufweitung des Durchmessers im Vergleich zum kleinsten Durchmesser von ca. 50 % erreicht wird.

Die Längenausdehnung sollte so gering wie möglich sein, vorzugsweise maximal 6 % bei 0,3 bar.

Nachfolgend ist ein entsprechendes Diagramm als Figur beigefügt, das das Dehnungsverhalten für drei Rohrleitungsnennweiten DN70 bis DN100 (gekennzeichnet, als "DN70-100") des erfindungsgemäßen Auskleidungsmaterials veranschaulichen und im Vergleich dazu das Verhalten für ein Material, das nach dem alten Verfahren hergestellt wurde (gekennzeichnet als "DN70-100 alt"), bei dem das Rundstrickmaterial auf einem Strickkopf hergestellt wurde, der hinsichtlich seines Durchmessers der größten Nennweite entspricht, bei der das Rohrauskleidungsmaterial eingesetzt werden soll. Deutlich zu erkennen ist dabei die geringere Gesamtdehnbarkeit, die jedoch ausreichend ist, um eine hinreichende Kurvengängigkeit zu gewährleisten, wobei jedoch durch die geringere Dehnbarkeit die Berstsicherheit erhöht ist und die Längendehnung besser beherrschbar ist.

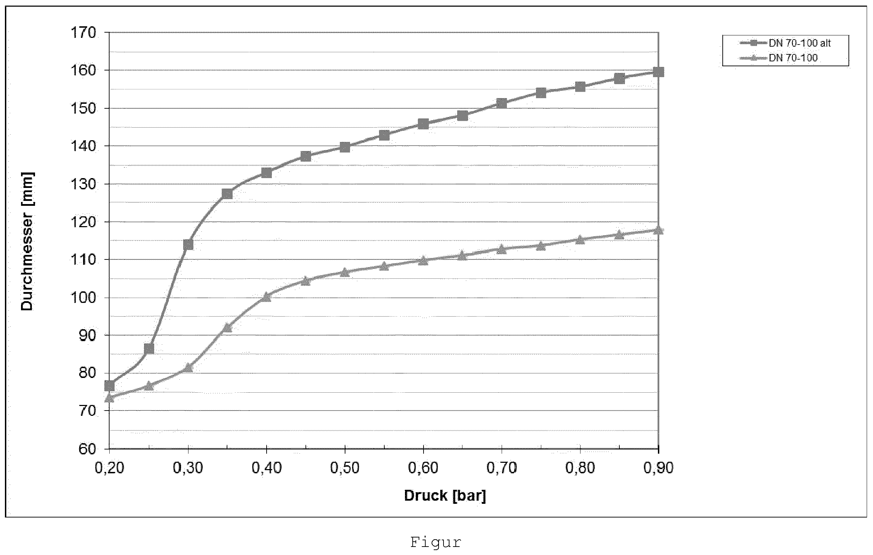

## Patentansprüche

1. Rohrleitungsauskleidungsmaterial zur Verwendung für mindestens zwei, vorzugsweise drei vordefinierte Rohrleitungsnennweiten umfassend ein elastisches Rundstrickmaterial, welches unter Vorspannung so gestrickt ist, dass es sich nach dem Stricken auf einen entspannten Durchmesser von +/-10% der kleinsten vordefinierten Rohrleitungsnennweite zusammenzieht sowie einen um das Rundstrickmaterial herum angeordneten elastisch dehnbaren Folienschlauch, wobei das Rohrauskleidungsmaterial um mindestens 50% in Querrichtung aufweitbar ist bei einem Druck von maximal 0,7 bar, **dadurch gekennzeichnet, dass** das entspannte Rundstrickmaterial höchstens einen um 55% geringeren Durchmesser aufweist als das unter Vorspannung stehende Rundstrickmaterial.

2. Rohrleitungsauskleidungsmaterial nach Anspruch 1, **dadurch gekennzeichnet, dass** das Rundstrickmaterial ein PlüschTextilschlauch ist.

3. Rohrleitungsauskleidungsmaterial nach Anspruch 1 oder 2, **dadurch gekennzeichnet, dass** das Rundstrickmaterial ein Grundmaterial mit einem elastischen Fadensystem und einem unelastischen Dehnungsbegrenzungsfaden sowie ein darin eingebrachtes Henkelmaterial umfasst.

4. Rohrleitungsauskleidungsmaterial nach Anspruch 3, **dadurch gekennzeichnet, dass** das Grundmaterial die Dehnung in Querrichtung auf maximal 80% des Durchmessers des Rohrauskleidungsmaterials bei einen Druck von 0,9 bar begrenzt.

5. Rohrleitungsauskleidungsmaterial nach Anspruch 3 oder 4, **dadurch gekennzeichnet, dass** ein weiteres Zusammenziehen des Rohrauskleidungsmaterials durch das Rundstrickmaterial, insbesondere durch den Dehnungsbegrenzungsfaden, begrenzt ist.

6. Rohrleitungsauskleidungsmaterial nach einem der vorangehenden Ansprüche, **dadurch gekennzeichnet, dass** die maximale Dehnung des Rohrauskleidungsmaterials in Längsrichtung 15%, insbesondere 10% bei einem Druck von 0,6 bar nicht übersteigt.

7. Rohrleitungsauskleidungsmaterial nach einem der vorangehenden Ansprüche, **dadurch gekennzeichnet, dass** die Fadenzugkraft des elastischen Fadens des Rundstickmaterials bei der Herstellung 50-240 cN beträgt, insbesondere 50-150 cN.

8. Rohrleitungsauskleidungsmaterial nach einem der vorangehenden Ansprüche, **dadurch gekennzeichnet, dass** ein Dehnungsbegrenzungsfaden im Rundstrickmaterial eine Fadenfeinheit von 200 - 2000 dtex, vorzugsweise 450-1000 dtex und vorzugsweise 500-600 dtex aufweist.

9. Verwendung eines Rohrleitungsauskleidungsmaterials nach einem der vorstehenden Ansprüche, **dadurch gekennzeichnet, dass** das Rohrleitungsauskleidungsmaterial zur Auskleidung von Rohrleitungen dient und jeweils drei vordefinierte Rohrleitungsnennweiten durch ein Rohrauskleidungsmaterials abdeckbar sind.

## Claims

1. A pipeline-lining material for use for at least two, preferably three predefined nominal pipeline widths comprising an elastic circular-knit material knitted under pre-tension such that, after knitting, it contracts to a relaxed diameter of +/-10% of the smallest predefined nominal pipeline width, and also an elastically extensible film tube arranged about the circular-knit material, wherein the pipe-lining material is at least 50% widenable in the transverse direction at a pressure of not more than 0.7 bar, **characterized in that** the relaxed circular-knit material at most displays a 55% smaller diameter than the pre-tensioned circular-knit material.

2. The pipeline-lining material as claimed in claim 1, **characterized in that** the circular-knit material is a plush textile tube.

3. The pipeline-lining material as claimed in claim 1 or 2, **characterized in that** the circular-knit material comprises a basic material having an elastic system of threads and an inelastic extension-limiting thread and also a pile loop material incorporated therein.

4. The pipeline-lining material as claimed in claim 3, **characterized in that** the basic material limits the extension in the transverse direction to not more than 80% of the diameter of the pipe-lining material at a pressure of 0.9 bar.

5. The pipeline-lining material as claimed in claim 3 or 4, **characterized in that** any further contraction of the pipe-lining material is limited by the circular-knit material, especially by the extension-limiting thread.

6. The pipeline-lining material as claimed in any preceding claim, **characterized in that** the maximum extension of the pipe-lining material in the longitudinal direction does not exceed 15%, especially 10% at a pressure of 0.6 bar.

7. The pipeline-lining material as claimed in any preceding claim, **characterized in that** the thread-pulling force of the elastic thread of the circular-knit material in the course of production is 50-240 cN, especially 50-150 cN.

8. The pipeline-lining material as claimed in any preceding claim, **characterized in that** an extension-limiting thread in the circular-knit material has a linear density of 200-2000 dtex, preferably 450-1000 dtex and preferably 500-600 dtex.

9. A method of using a pipeline-lining material as claimed in any preceding claim, **characterized in that** the pipeline-lining material is used for lining pipelines and in each case three predefined nominal pipeline widths are coverable by one pipe-lining material.

## Revendications

1. Matériau de revêtement de tuyauterie destiné à être utilisé pour au moins deux, de préférence trois, diamètres nominaux de tuyauterie prédéfinis, comprenant une matière tricotée circulaire élastique qui est tricotée sous précontrainte de telle sorte que, après avoir été tricotée, elle se contracte de manière à présenter un diamètre détendu de +/-10 % du diamètre nominal prédéfini le plus petit de la tuyauterie, ainsi qu'un tuyau flexible en film élastiquement extensible qui est disposé autour de la matière tricotée circulaire, dans lequel le matériau de revêtement de tuyau peut être évasé d'au moins 50 % dans le sens transversal, à une pression de 0,7 bar au maximum, **caractérisé par le fait que** la matière tricotée circulaire détendue présente tout au plus un diamètre qui est de 55 % plus petit que celui de la matière tricotée circulaire sous précontrainte.

2. Matériau de revêtement de tuyauterie selon la revendication 1, **caractérisé par le fait que** la matière tricotée circulaire est un tuyau flexible textile en peluche.

3. Matériau de revêtement de tuyauterie selon la revendication 1 ou 2, **caractérisé par le fait que** la matière tricotée circulaire comprend une matière de base ayant un système de fil élastique et un fil non élastique de limitation d'extension ainsi qu'une matière de boucle de charge y insérée.

4. Matériau de revêtement de tuyauterie selon la revendication 3, **caractérisé par le fait que** la matière de base limite l'extension dans le sens transversal à 80 % au maximum du diamètre du matériau de revêtement de tuyau, à une pression de 0,9 bar.

5. Matériau de revêtement de tuyauterie selon la revendication 3 ou 4, **caractérisé par le fait qu'**une nouvelle contraction du matériau de revêtement de tuyau est limitée par la matière tricotée circulaire, en particulier par le fil de limitation d'extension.

6. Matériau de revêtement de tuyauterie selon l'une quelconque des revendications précédentes, **caractérisé par le fait que** l'extension maximale du matériau de revêtement de tuyau dans le sens longitudinal ne dépasse pas 15%, en particulier 10%, à une pression de 0,6 bar.

7. Matériau de revêtement de tuyauterie selon l'une quelconque des revendications précédentes, **caractérisé par le fait que** la force de traction de fil du fil élastique de la matière tricotée circulaire est comprise entre 50 et 240 cN, en particulier entre 50 et 150 cN lors de la fabrication.

8. Matériau de revêtement de tuyauterie selon l'une quelconque des revendications précédentes, **caractérisé par le fait qu'**un fil de limitation d'extension dans la matière tricotée circulaire présente un titre compris entre 200 et 2000 dtex, de préférence entre 450 et 1000 dtex et de préférence entre 500 et 600 dtex.

9. Utilisation d'un matériau de revêtement de tuyauterie selon l'une quelconque des revendications précédentes, **caractérisée par le fait que** le matériau de revêtement de tuyauterie sert à revêtir des tuyauteries, et que respectivement trois diamètres nominaux de tuyauterie prédéfinis peuvent être recouverts par un matériau de revêtement de tuyau.
